# EUROPÄISCHE PATENTSCHRIFT

(11) **EP 1 970 606 B1**
(45) Veröffentlichungstag und Bekanntmachung des Hinweises auf die Patenterteilung: **12.05.2010**
(21) Anmeldenummer: 08004036.3
(22) Anmeldetag: 04.03.2008
(51) Int. Cl.: F16K 1/22

(54) **Klappenventil**
Butterfly valve
Vanne papillon

(30) Priorität: 14.03.2007 DE 202007003782 U
(43) Veröffentlichungstag der Anmeldung: 17.09.2008
(73) Patentinhaber: Unruh, Roland, 31787 Hameln (DE)
(72) Erfinder: Unruh, Roland, 31787 Hameln (DE)

(56) Entgegenhaltungen:
- JP-A- 6 272 767
- US-A- 5 203 539
- US-A- 5 385 333

## Beschreibung

Die Erfindung betrifft ein Klappenventil mit einer Antriebswellen- und Zapfenverbindung zur Klappenscheibe, gemäß dem Oberbegriff des Anspruches 1.

### Stand der Technik:

Klappenventile sind bekannte Ventilbauarten. Sie bestehen aus einem Gehäuse mit einem angeformten Hals und angeformten Befestigungsflanschen für ihren Einbau in Rohrleitungssysteme. Der Hals nimmt eine Antriebswelle zur Betätigung einer Klappenscheibe für die Öffnungs- und Schließfunktion des Ventiles auf. Auf der gegenüberliegenden Seite der Antriebswelle ist ein Zapfen, der im Gehäuse gelagert ist, angebracht. Die Klappenscheibe befindet sich zwischen der Welle und dem Zapfen und kann über die Antriebswelle in einer Dichtmanschette geschwenkt werden. Diese Manschette ist zwischen der Klappenscheibe und dem Gehäuse fest einmontiert.

Für die sichere Ventilfunktion sind die Wellen- Zapfenverbindungen zu den Klappenscheiben von Bedeutung. An diesen Stellen verlassen die Baukomponenten Welle und Zapfen durch die Dichtungsmanschette hindurch, den unter Druck stehenden Innenraum des Klappenventiles. Das bedeutet, dass die Verbindungen ausreichend fest und dicht sein müssen.

Derzeitig werden die Klappenscheiben überwiegend in einem Stück als Kreiskörper mit angeformten Augen zur Aufnahme der Antriebswelle und der Zapfen im Gießverfahren oder als Schmiedeteil hergestellt. Zur Aufnahme der Welle und des Zapfens sind Sackbohrungen in die Augen der Klappenscheibe eingebracht. Die Herstellung der Klappenscheibe und die anschließende Montage beeinflussen maßgeblich die Herstellkosten der Klappenventile.

Ein anderer Stand der Technik ist aus der EP 1174b48 bekannt. Darin werden Zapfen (2') und (2") als am Boden geschlossene Gebilde vorgestellt, die einzeln gefertigt und z. B. durch Schweißen an der Klappenscheibe angebracht sind.

Die Abdichtung zwischen der so hergestellten Klappenscheibe und der Dichtung (3) erfolgt durch die Einbettung der Zapfen (2') und (2") in die Dichtung (3). Diese Bauweise ist vergleichsweise zu der hier gesuchten Lösung aufwendig und teuer.

In Dokument US 5 203 539 ist eine mehrteilige Dichtungsanordnung offenbart, die durch eine Hülse gegen die Dichtmanschette pressbar ist.

### Aufgabenstellung:

Der Erfindung liegt die Aufgabe zu Grunde, eine Antriebswellen- und Zapfenverbindung zur Klappenscheibe zu schaffen, deren Einzelteile in vereinfachten Fertigungsschritten herstellbar sind und die Endmontage des Klappenventiles weitgehend automatisierbar machen.

Das Problem wird durch den Anspruch 1 gelöst.

### Beschreibung:

In der folgenden Beschreibung wird schwerpunktmäßig auf die Verbindung der Antriebswelle mit der Klappenscheibe eingegangen. Die Zapfenverbindung zur Klappenscheibe ist gleichermaßen wie die Wellenverbindung gestaltet.

Grundsätzlich bestehen die zwei Verbindungen aus den Ventilbaukomponenten Antriebswelle und Zapfen, der Klappenscheibe und je einen, die Komponenten verbindenden Dichtring. Als die vorteilhafte Neuerung gilt der Dichtring, der die Dichtfunktion durch seine stirnseitige Anlage an die Gummimanschette übernimmt und gleichzeitig der Verbindung festigenden Halt gibt. Erfindungsgemäss ist dieser Dichtring entsprechend dem Einsatzfall und je nach Baugröße der Absperrklappe als Einzelteil gefertigt und an der Klappenscheibe befestigt. Gemäß einer Ausführungsform, die nicht Teil der Erfindung ist, kann der Dichtung an die Klappenscheibe angeformt werden. Ist der Dichtring angeformt, so besteht er aus dem Klappenscheibenmaterial. Als Einzelteil kann er aus metallischen oder nichtmetallischen Werkstoffen, mit den Methoden der spanenden Fertigung, der Blechumformung oder des Spritzgießens hergestellt sein. Darüber hinaus sind weitere Herstellungsverfahren denkbar. Die Abmaße der Innenbohrungen der Dichtringe sind auf wählbare Befestigungsmontagen mit der Welle und dem Zapfen abgestimmt. Ebenso ist die Außenkontur des Dichtringes als Einzelteil auf ein Verbindungsverfahren mit der Klappenscheibe ausgerichtet.

In dem Fall, dass der Dichtring nicht an die Klappenscheibe angeformt ist, würde die Klappenscheibe die Form einer ebenen, kreisrunden Platte haben, die z. B. mit einem preisgünstigen Herstellungsverfahren wie dem Brennschneiden oder dem Stanzen und einem maschinellen Entgratvorgang einbaufertig hergestellt werden. Zur Befestigung des Dichtringes an der Klappenscheibe stehen verschiedene Verbindungsverfahren zur Auswahl, wie z. B. Pressen, Kleben, Löten oder Schweißen. Bei entsprechender Einzelteilvorbereitung sind weitere Verbindungsverfahren einsetzbar.

Die Antriebswelle und der Zapfen sind an ihren Enden mit einem Mitnehmerschlitz zur Aufnahme eines Mitnehmersegmentes an der Klappenscheibe versehen. Sind die Dichtringe an die Klappenscheibe montiert, dann können die Antriebswelle und der Zapfen bei der Endmontage der Absperrklappe mit dem Mitnehmerschlitz voran durch den jeweiligen Dichtring hindurch auf die Klappenscheibe mit einem Kraftaufwand gepresst werden. Bei diesem Fügevorgang der Komponenten übernehmen die Antriebswelle und der Zapfen die feste Verbindung und die Zentrierung der Einzelteile untereinander. Eine Verbesserung der Festigkeit der Verbindung ist durch weitere Maßnahmen erreichbar. Zusätzlich zum beschriebenen Fügevorgang wird die Wandung des Dichtringes in die mit tangentialen Nuten vorbereitete Welle und Zapfen verformt. Überragen die Antriebswellen- und Zapfenenden die Dichtringbreite in Richtung des Zentrums der Klappenscheibe, dann ist unterhalb des Dichtringes eine Verbindung zwischen dem Antriebswellenende, dem Zapfenende und der Klappenscheibe herstellbar. Diese Maßnahmen genügen auch, um Welle und Zapfen gegen ein Heraustreiben aus dem Dichtring zu sichern. Die Abdichtung der Verbindung wird durch die gewählten Abmaße zwischen Dichtring und Klappenscheibe und Dichtring zum Wellen- Zapfenende erreicht.
Die vorgeschlagene bauliche Trennung der Aufnahmeaugen für die Wellen- und Zapfenverbindung von der Klappenscheibe und die Verwendung von Dichtringen bietet der Klappenherstellung die gesuchten Vorteile. So sind keine Gußformen erforderlich, zu denen der zu vergießende Werkstoff mit kostentreibenden Legierungsbeimengungen gießfähig gemacht werden muß. Die vorgestellte Lösung geht von Standardhalbzeugen aus, aus denen die Klappenscheiben ausgestanzt oder ausgebrannt werden. Der Dichtring kann aus verschiedenen Materialien bestehen und auf das günstigste Herstellungsverfahren, wie z. B. Tiefziehen oder Spritzgießen ausgerichtet sein. Durch einen Einpressvorgang wird die Verbindung zwischen der Klappenscheibe und dem Dichtring hergestellt. Bei der bekannten Problemlösung der Klappenscheibe mit angeformten Augen wird die Zapfen- Wellenverbindung durch zusätzliche Bauteile zu einer z. B. Stiftverbindung ausgeführt, die die Drehbewegung der Welle auf die Klappenscheibe überträgt und das Heraustreiben der Welle aus der Armatur verhindert. Dagegen kommt die vorgeschlagene Lösung bei entsprechender Vorbereitung der Welle und des Dichtringes ohne zusätzliche Bauteile aus. Eine Sicherungsfahne am Dichtring, unmittelbar bei der Wellen- und Zapfenmontage mit der Klappenscheibe in die Tangentialnut der Welle eingedrückt, löst in einem Arbeitsgang das Problem der Sicherung der Welle vor dem Heraustreiben. Alle Bauteile, die die sichere Funktion des Klappenventiles übernehmen, lassen sich mit bekannten Fertigungsverfahren der Großserienfertigung herstellen. Ein schneller, gut automatisierbarer Füge- und Montagevorgang schließt die Herstellung dieser wichtigen Baukomponenten kostengünstig ab.

Eine weitere hilfreiche Lösung zur Herstellung einer Antriebswellen- und Zapfenverbindung zur Klappenscheibe ist die Verwendung von Dichtringen mit genuteter Unterseite für die Aufnahme eines Mitnehmersegmentes an der Klappenscheibe. Durch diese Nut wird eine Abdichtung von der Klappenscheibe zur Welle und zum Zapfen verbessert.

Die Erfindung lässt verschiedene Ausführungen zu. Einige sollen an Hand von Zeichnungen näher erläutert werden.
- Fig. 1:: Gesamtansicht der Antriebswellen- und der Zapfen- Klappenscheibenverbindung mit der Gummimanschette des Klappenventiles.
- Fig. 2:: Dichtring als Einzelteil an der Klappenscheibe befestigt und Ausführung der Wellen- Zapfenenden.
- Fig. 3:: Verschiedene Ausführungsformen von Dichtringen als Einzelteile.
- Fig. 4:: Dichtring mit achsialer Fixiernut am Umfang.
- Fig. 5:: Dichtring mit angearbeiteter Sicherungsfahne gegen das Ausblasen der Antriebswelle und des Zapfes.
- Fig. 6:: Beispiel einer gefestigten Antriebswellen- und Zapfen- Klappenscheibenverbindung.
- Fig. 7:: Dichtring als angeformtes Teil an der Klappenscheibe, gemäß einer Ausführungsform, die nicht Teil der Erfindung ist.
- Fig. 8:: Beispiel einer Antriebswellen- und Zapfenverbindung mit geschlitztern Dichtring.

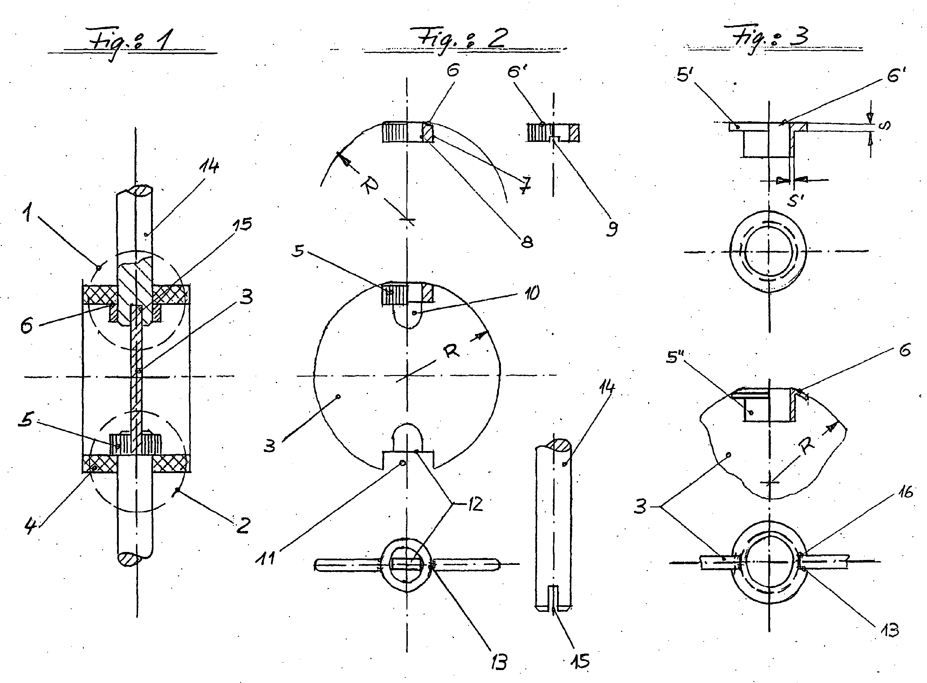

Die Fig. 1 zeigt in der Schnittansicht eine montierte Antriebswellen (1)- und Zapfenverbindung (2) mit den Wellen- und Zapfenenden (14) und der Klappenscheibe (3). Gelagert sind diese Baukomponenten in der Dichtmanschette (4). Die Abdichtung des Antriebswellen- und Zapfendurchganges durch die Manschette erfolgt über die anliegende Dichtfläche (6) der Dichtringe (5) an der Manschette.

Die Fig. 2 zeigt alle Baukomponenten zur Herstellung der Verbindungen (1) und (2). Die Klappenscheibe (3) hat zur Aufnahme des Dichtringes (5) und der Wellen-Zapfenenden (14) eine Ausnehmung (11) sowie eine Anlagefläche (10) mit einem Mittnehmersegment (12). Der Dichtring (5) und die Klappenscheibe (3) können, jedes Teil für sich, aus unterschiedlichen Materialien hergestellt sein. Zur Anwendung kommen sowohl metallische als auch nichtmetallische Werkstoffe. Die Kontur des Dichtringes ist je nach gewähltem Verbindungsverfahren (13) ausgestaltet. Die vorhandenen Seiten (7) und (8) müssen in ihren Linien nicht gerade sein, sondern können Schrägen oder Absätze tragen. Zusätzlich würde die Außenseite (7) rau oder selbstschneidend, hier mit Rändelung gezeigt, ausgeführt werden können. Auch die Ausnehmung (11) könnte innenseitig selbstschneidende Konturen haben. Die Nut (9) am Dichtring (5), die in das Mitnehmersegment (12) eingreift, gibt mit einer zweiten Verbindung (13) der Verbindung (1) und (2) gute Festigkeit gegen hohe Betriebsbelastungen. Die Form der Dichtfläche (6) des Dichtringes (5) ist frei wählbar, z. B. kann sie nach dem Klappenradius (R) oder als ebene Fläche (6') ausgestaltet sein. Die Wellen- Zapfenenden (14) sind mit einem Mitnehmerschlitz (15) versehen, der bei der Montage der Welle und des Zapfens in das Mitnehmersegment (12) greift und über die Anlagefläche (10) gepresst dicht anliegt.

Die Fig. 3 zeigt mögliche Dichtringausführungen (5',5' '), deren Dichtfläche (6) und (6') als Bund ausgeführt sind. Die Wandungen (S) der Dichtringe können je nach gewähltem Verbindungsverfahren zur Wandung (S') unterschiedlich sein. Die Dichtfläche (6) hat z. B. eine Ausklinkung (16), die die Klappenscheibe (3) aufnimmt. Die Ausklinkungen sind maßlich so abgestimmt, dass sie sich dichtend an die Klappenscheibe seitlich anlegen und wenn nötig eines der üblichen Verbindungsverfahren (13), wie z. B. Kleben, Schweißen anwendbar ist. Die Dichtringe lassen sich mit spanenden oder spanlosen Fertigungsverfahren herstellen. Denkbar sind auch Ringe, die aus mehreren Teilen bestehen (nicht gezeichnet), die dann verbunden die Eigenschaften der Dichringe (5,5',5",5"") übernehmen.

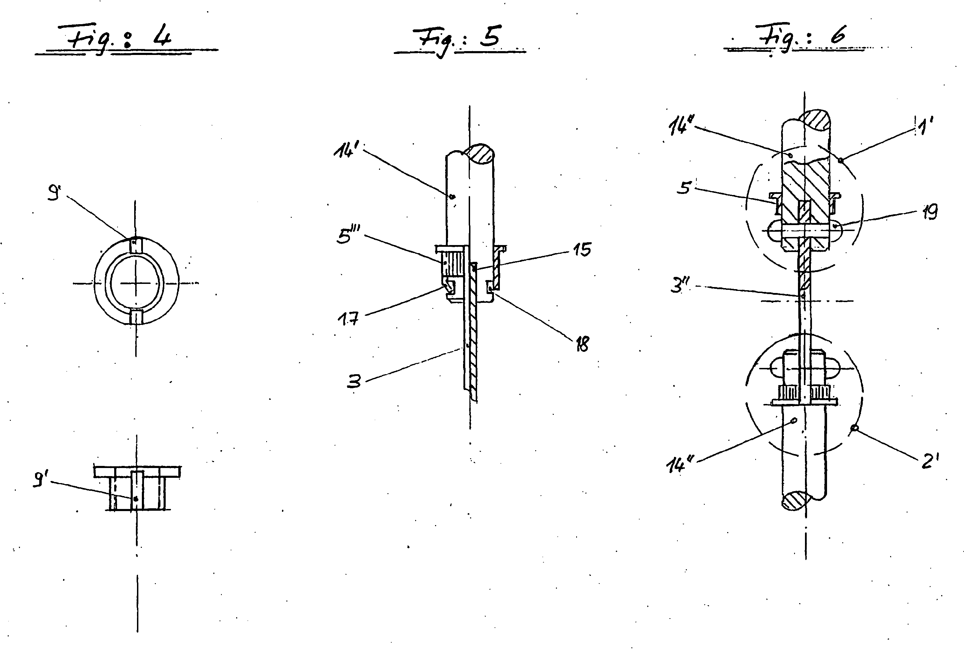

Die Fig. 4 zeigt eine Variante der zuvor beschriebenen Dichtringe. Die vorliegende Ausführung trägt an ihrem Umfang eine Fixiernut (9') zur Aufnahme des Dichtringes in der Klappenscheibenausnehmung (11).

Die Fig. 5 zeigt eine Variante der Antriebswellen- und Zapfenenden (14'), die zu dem Mitnehmerschlitz (15) tangentiale Nuten (18) tragen. Der Dichtring (5"') besitzt angeformte Sicherungsfahnen (17). Diese Fahnen verhindern, geformt in die Nut (18), ein durch den Innendruck im Klappenventil hervorgerufenes Ausblasen der Wellen und Zapfen aus dem Sicherungsring.

Die Fig. 6 zeigt eine verstärkte Ausführung der Antriebswellen- und Zapfenverbindung in der Form von (1') und (2'). Die Wellen- und Zapfenenden (14") und die Klappenscheibe (3") weisen Bohrungen für lösbare oder unlösbare Verbindungselemente (19) auf. An dieser Stelle sind auch Verbindungsmethoden denkbar, die keiner Bohrung bedürfen.

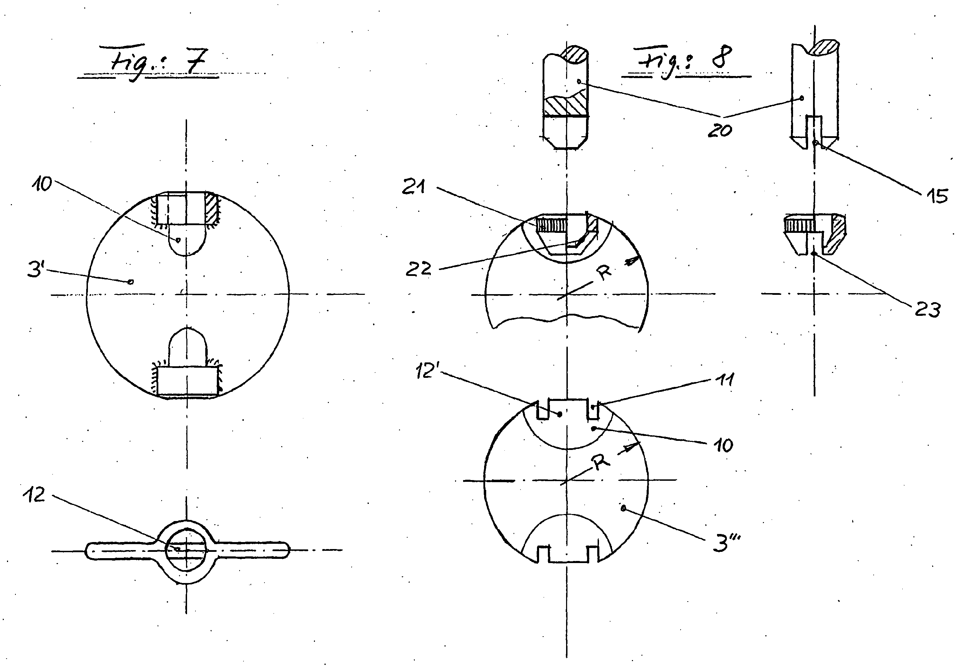

Die Fig. 7 zeigt in zwei Ansichten die Ausführungen einer Klappenscheibe (3') mit angeformtem Dichtring. Diese Ausführung trägt die Anlagefläche (10) und das Mitnehmersegment (12) zur Aufnahme der Wellen- und Zapfenenden (14) mit den Mitnehmerschlitzen (15).

Die Fig. 8 zeigt Bauteile für eine Antriebswellen- und Zapfenverbindung mit keglig auslaufenden Wellen- und Zapfenenden (20) und Schlitzen (15). Ein Dichtring (21), dessen Innenkontur (22) an die der Wellen- und Zapfenenden (20) angeangepasst ist, trägt einen Schlitz (23) zur Aufnahme des Mitnehmersegmentes (12'). Die Klappenscheibe (3"') hat eine modifizierte Form mit verlängertem Mitnehmersegment (12'). Die übrigen Merkmale gleichen denen, wie sie in der Fig.2 vorgestellt worden sind.

Zusammenfassend sollen die in den Figuren beispielhaft gezeigten und im Detail beschriebenen Ausführungen keinesfalls als Einschränkungen gesehen werden. Kombinationen, die nicht nur aus den Darstellungen möglich sind, kennzeichnen die Erfindung gegenüber dem Stand der Technik.

### Bezugszeichenliste:

- 1: Antriebswellenverbindung
- 1': Antriebswellenverbindung (verstärkt)
- 2: Zapfenverbindung
- 2': Zapfenverbindung (verstärkt)
- 3: Klappenscheibe
- 3': Klappenscheibe mit angeformtem Dichtring
- 3": Klappenscheibe mit Bohrungen für Verbindungselemente
- 3"': Klappenscheibe für geschlitzten Dichtring
- 4: Dichtmanschette
- 5: Dichtring, gerändelt
- 5': Dichtring, gerader Bund mit Ringkörper
- 5": Dichtring, gewölbter Bund mit Ringkörper
- 5"': Dichtring mit Sicherungsfahne (17)
- 6: Dichtfläche (gewölbt), mit oder ohne Ausklinkung
- 6': Dichtfläche (eben), mit oder ohne Ausklinkung
- 7: Außenseite des Dichtringes
- 8: Innenseite des Dichtringes
- 9: Nut im Dichtring
- 9': Fixiernut
- 10: Anlagefläche
- 11: Ausnehmung in der Klappenscheibe
- 12: Mitnehmersegment
- 12': Mitnehmersegment, verlängert

- 13: Verbindung Dichtring/Klappenscheibe, verschiedene Verfahren möglich
- 14: Wellen- und Zapfenende
- 14': Wellen- und Zapfenende mit radialer Nut (18)
- 14": Wellen- und Zapfenende mit Bohrung
- 15: Mitnehmerschlitz
- 16: Ausklinkung mit Dichtringbund
- 17: Sicherungsfahne
- 18: Tangentialnut
- 19: Verbindungselement, lösbar, unlösbar
- 20: Wellen- Zapfenenden keglig und geschlitzt
- 21: Dichtring gerändelt, mit Schlitz und angepasster Innenkontur
- 22: Innenkontur angepasst
- 23: Schlitz
- R: Klappenscheibenradius
- S: Wandung der Dichfläche
- S': Wandung Ringkörper

## Patentansprüche

1. Klappenventil, mit einem eine Dichtmanschette (4) aufnehmenden Gehäuse und einer in der Dichtmanschette (4) schwenkbar gelagerten Klappenscheibe (3), an der jeweils an einem Mitnehmersegment (12) ein Antriebswellen- und gegenüberliegend ein Zapfenende (14) verdrehsicher angeschlossen sind, wobei das jeweilige Mitnehmersegment (12) in einem stirnseitigen Mitnehmerschlitz (15) des Antriebswellen- bzw. des Zapfenendes (14) eingreift, die jeweils von einem dichtend anliegenden, verdrehfest an der Klappenscheibe (3) angeordneten Dichtring (5) umschlossen sind, **dadurch gekennzeichnet, dass** der jeweilige, einteilig ausgebildete Dichtring (5) das Antriebswellen- bzw. Zapfenende (14) ausschließlich in dem in den Innenraum der Dichtmanschette (4) ragenden Bereich umschließt und mit einer stirnseitigen Dichtfläche (6) dichtend an der Innenseite der Dichtmanschette (4) anliegt.

2. Klappenventil nach Anspruch 1, **dadurch gekennzeichnet, dass** der Dichtring (5,5',5'',5''',21) und die Klappenscheibe (3,3',3'',3'''), jede Baukomponente für sich, aus unterschiedlichen Materialien sein können, die metallisch oder nichtmetallisch sind.

3. Klappenventil nach Anspruch 1 und 2, **dadurch gekennzeichnet, dass** der Dichtring (5,5',5'',5''',21) eine gewölbte, eine gerade oder eine Kombination beider Linienzüge als Dichtfläche (6,6') hat.

4. Klappenventil nach einem der vorhergehenden Ansprüche, daduch **gekennzeichnet**, dass die Außenseite (7) und die Innenseite (8) des Dichtringes (5,5',5'',5''') parallel oder abweichend voneinander verlaufen und die Außenseite (7) rau ist, selbstschneidende Markierungen aufweist oder andere Vorbereitungen zur Abdichtung gegenüber der Klappenscheibe (3,3',3'',3''') trägt.

5. Klappenventil nach einem der vorhergehenden Ansprüche, **dadurch gekennzeichnet, dass** die Dichtfläche (6,6') der Dichtringe (5',5") mit ihrem Bund über den Ringkörper hinausragen, die Wandung des Ringkörpers (S') und der Dichtfläche (S) unterschiedlich sein kann und die Dichtringe (5',5'') eine Ausnehmung (16) zur Aufnahme der Klappenscheibe (3) aufweisen und eine Verbindung (13) durchgeführt werden kann:

6. Klappenventil nach einem der vorhergehenden Ansprüche, **dadurch gekennzeichnet, dass** der Dichtring (5,5',5", 5''') eine Sicherungsfahne (17) und eine Nut (9) aufweist oder eine der beiden Merkmale (17) und (9) trägt.

7. Klappenventil nach einem der vorhergehenden Ansprüche, **dadurch gekennzeichnet, dass** die Wellen- und Zapfenenden (14) für eine Verbindung, z. B. Schweißen, mit der Klappenscheibe (3,3') vorbereitet wird oder die Wellen- und Zapfenverbindung (14') eine tangentiale Nut (18) trägt oder das Wellen- und Zapfenenden (14'') eine Bohrung zur Aufnahme eines lösbaren oder unlösbaren Verbindungselementes 19) aufweist.

8. Klappenventil nach einem der vorhergehenden Ansprüche, **dadurch gekennzeichnet, dass** die Klappenscheiben (3,3',3'',3''') eine Ausnehmung (11) zur Aufnahme des Dichtringes (5,5',5'',5''',21) mit einem Mitnehmersegment (12,12'), einer Auflagefläche (10) als Vorbereitung für ein weiteres Verbindungsverfahren, wie z. B. Schweißen oder gebohrt für Verbindungselemente (19) ausgestattet ist.

9. Klappenventil nach einem der vorhergehenden Ansprüche, **dadurch gekennzeichnet, dass** die Wellen-Zapfenenden (20) keglig und geschlitzt (15) sind, der Dichtring (21) mit einem Schlitz (23) zur Aufnahme der Klappenscheibe (3''') versehen ist, die Innenkontur (22) an die Wellen- und Zapfenenden (20) angepasst ist und die Klappenscheibe (3''') ein verlängertes Mitnehmersegment (12') aufweist.

## Claims

1. Butterfly valve, with a sealing collar (4) in a valve housing and within the sealing collar (4) a rotable butterfly disk (3), where on each opposing driving segment (12) the end of a driving shaft or a pivot end (14) respectively is fastened in a torsional safe way, while the respective driving segment (12) fits into a driving recess (15) on the face side of the driving shaft ending or pivot ending (14), which are both surrounded by a caulking seal ring (5) that is fixed to the butterfly disk (3) in a torsional safe way, **characterised In that** the respective one-piece seal ring (5) encloses the end of the driving shaft or pivot (14) exclusively in its part that extends into the internal space of the sealing collar (4), sealing up with its frontal sealing face (6) the inner surface of the seal collar (4).

2. Butterfly valve according to claim 1, **characterised in that** the seal ring (5, 5', 5", 5''', 21) and the butterfly disk (3, 3', 3", 3'''), each component part for itself, can be made of different materials, metallic or non-metallic.

3. Butterfly valve according to claim 1 and 2, **characterised in that** the seal ring (5, 5', 5", 5"', 21) can have a convex or a straight sealing face (6, 6') or a combination of both.

4. Butterfly valve according to one of the previous claims, **characterised in that** the exterior surface (7) and the interior surface (8) of the seal ring (5, 5', 5", 5''') run parallel to each other or divergent and that the exterior surface (7) is rough, featuring self-cutting marks or other preparations for sealing the butterfly disc (3,3',3'',3''').

5. Butterfly valve according to one of the previous claims, **characterised in that** the sealing face (6, 6') of the seal rings (5', 5") extend with their collar over the ring body, that the wall of the ring body (S') and the sealing face (S) can be different, that the seal rings (5', 5") feature a cut (16) for the intake of the butterfly disc (3), that a connection (13) can be made.

6. Butterfly valve according to one of the previous claims, **characterised in that** the seal ring (5, 5', 5", 5''') has a safety flag (17) and a groove (9) or one of these two characteristics (17) and (9).

7. Butterfly valve according to one of the previous claims, **characterised in that** the endings of the driving shaft or the pivot (14) are prepared for an assembly with the butterfly disc (3,3'), for instance by welding, or the ending of driving shaft or pivot (14') have a tangential groove (18), or the ending of driving shaft or pivot have a bore hole for the intake of a removable or unremovable connecting-element (19).

8. Butterfly valve according to one of the previous claims, **characterised in that** the butterfly discs (3,3',3'',3''') feature a cut (11) for the intake of the seal ring (5,5',5'',5''',21), a driving segment (12,12'), a bearing surface (10) as preparation for a further connecting procedure, for instance welding or drilling for connecting-elements (19).

9. Butterfly valve according to one of the previous claims, **characterised in that** the endings of driving shafts or pivots (20) are cone-shaped or slotted (15), the seal ring (21) has a slot (23) for the intake of the butterfly disc (3'''), the inner contour (22) is fitted to the endings of driving shafts or pivots (20) and the butterfly disc (3"') has a prolonged driving segment (12').

## Revendications

1. Papillon avec un corps où se trouve une garniture d'étanchéité (4) dans laquelle se situe une rondelle pivotante (3) avec un segment d'entraînement (12) auquel sont fixés le bout d' un arbre de commande et en face le bout d'un pivot (14) de façon qu'une torsion soit excluse, car le segment d'entraînement (12) respectif pénètre dans une fente d'entraînement frontal (15) du bout de l'arbre de commande respectivement du bout du pivot (14) qui sont tous les deux entourés fermement d'une bague d' étanchété (5), et fixés à la rondelle papillon (3) évitant toute torsion, **caractérisé en ce que** la bague d'étanchéité (5), faite d'une seule pièce, entoure uniquement la partie du bout de l'arbre de commande (14) respectivement le bout du pivot (14) pénétrant à l'intérieur de la garniture d'étanchéité (4) et que la face de contact frontale (6) adhère fermement à la paroi intérieure de la garniture d'étanchéité (4).

2. Papillon selon revendication 1, **caractérisé en ce que** la bague d'étanchéité (5,5',5'',5''',21) et la rondelle pivotante (3,3',3'',3''') peuvent, chaque élément de construction à part, être conçues en matériaux différents soit métalliques ou non-métalliques.

3. Papillon selon la revendication 1 et 2, **caractérisé en ce que** la bague d' étanchéité (5,5',5'',5''',21) peut avoir une face d'étanchéité (6,6') bombée ou plate ou même une combinaison de ces deux lignes.

4. Papillon selon l'une des deux revendications précédentes, **caractérisé en ce que** le côté extérieur (7) et le côté intérieur (8) de la bague d'étanchéité (5,5',5'',5''') sont parallèles ou divergents, et que la face extérieure (7) est rugueuse, possèdent des marques auto-tranchantes ou d'autres dispositifs d'étanchéité vis-à-vis de la rondelle pivotante (3,3',3'',3''').

5. Papillon selon les revendications précédentes, **caracterisé en ce que** la face d'étanchéité (6,6') des bagues d'étanchéité (5',5'') dépasse avec son bord le corps de la bague,que la paroi du corps de la bague (S') et de la face d'étanchéité (S) peuvent êtrre différentes et que les bagues d'étanchéité (5',5") ont un creux (16) pour placer la rondelle pivotante (3) permettant un raccord (13).

6. Papillon selon les revendications précédentes, **caractérisé en ce que** la bague d'étanchéité (5,5',5'',5''') possède un nez coudé de sécurité (17) et une rainure (9) ou l'un de ces deux dispositifs (17) et (9).

7. Papillon selon l'un des revendications précédentes, **caractérisé en ce que** les bouts des arbres de commande et des pivots (14) sont prévus pour un raccord avec la rondelle pivotante (3,3'), p.ex. par soudage, ou que le raccord de l'arbre de commande et du pivot (14') soit muni d'une rainure tangentielle (18) ou les bouts de l'arbre de commande et du pivot (14'') présentent un alésage pour introduire un élément de raccord (19) amovible ou fixe.

8. Papillon selon l'une des revendications précédentes, **caractérisé en ce que** la rondelle pivotante (3,3',3'',3''') présente un creux (11) pour placer la bague d'étanchéité (5,5',5'',5''',21) avec un segment d'entraînement (12,12'), ainsi qu'une surface d'appui (10) pour permettre une autre méthode de raccord, comme p.ex. par soudage ou par forage pour des éléments de raccord (19).

9. Papillon selon l'une des revendications précédentes, **caractérisé en ce que** les bouts des arbres de commande et des pivots (20) sont coniques et entaillés (15), que la bague d'étanchéité (21) est munie d'une fente (23) pour placer la rondelle pivotante (3'''), que le profil intérieur (22) est ajusté à la dimension des bouts d'arbres de commande et des pivots (20) et que la rondelle pivotante (3''') possède un segment d'entraînement prolongé (12').
